# EUROPÄISCHE PATENTSCHRIFT

(11) **EP 2 858 804 B1**
(45) Veröffentlichungstag und Bekanntmachung des Hinweises auf die Patenterteilung: **14.02.2018**
(21) Anmeldenummer: 13726775.3
(22) Anmeldetag: 31.05.2013
(51) Int. Cl.: B29C 47/88, B29C 47/92, H01H 37/52

(54) **VORRICHTUNG ZUM KÜHLEN EINER FOLIE MIT EINEM HEBELSYSTEM**
DEVICE FOR COOLING A FILM, COMPRISING A LEVER SYSTEM
DISPOSITIF DE REFROIDISSEMENT D'UN FILM COMPRENANT UN SYSTÈME DE LEVIER

(30) Priorität: 08.06.2012 DE 102012104963; 08.06.2012 US 201261657631 P
(43) Veröffentlichungstag der Anmeldung: 15.04.2015
(73) Patentinhaber: Windmöller & Hölscher KG, 49525 Lengerich (DE)
(72) Erfinder: RÜBBELKE, Ingo, 59590 Geselke (DE); JOPPE, Markus, 49497 Mettingen (DE)
(86) Internationale Anmeldenummer: PCT/EP2013/061298
(87) Internationale Veröffentlichungsnummer: WO 2013/182493

(56) Entgegenhaltungen:
- EP-A1- 0 522 487
- EP-A1- 1 004 424
- JP-A- 2002 083 523
- JP-A- 2011 198 485
- US-A- 4 414 529
- US-A- 5 804 221
- US-A1- 2007 098 834

## Beschreibung

Die Erfindung betrifft eine Vorrichtung zum Kühlen einer Folie, die insbesondere in einer Folienextrusionsanlage erzeugbar ist, mit einem Gehäuse, das zumindest einen Kanal sowie zumindest eine Eintrittsöffnung und zumindest eine Austrittsöffnung aufweist, durch die ein Kühlgas strömbar ist, und einer Stellanordnung, mit der der durch die Austrittsöffnung ausströmbare Volumenstrom des Kühlgases und die Temperatur des durch die Austrittsöffnung auströmbaren Kühlgases einstellbar ist.

In der PCT/EP2011/072648 ist eine Vorrichtung zum Kühlen einer Folie der oben genannten Art beschrieben. Hierbei weist die Vorrichtung ein Ventilelement auf, welches innerhalb des Gehäuses unterschiedliche Positionen einnehmen kann, wodurch der Volumenstrom des Kühlgases, der für die Anströmung auf die Folie genutzt wird, eingestellt werden kann. Zusätzlich erfolgt über das innerhalb des Gehäuses angeordnete Heizelement eine Temperaturbeeinflussung des Kühlgases. Es besteht das Bestreben, die Funktionalität und die Effizienz der bekannten Stellanordnung weiter zu erhöhen. Die US 5 804 221 A und EP 1 004 424 A1 beschreiben eine gattungsgemäße Vorrichtung zum Kühlen einer Folie. Nachteilhaft sind hierbei die Möglichkeiten zur Regulierung der Foliendicke mit Hilfe der vorhandenen Stellandordnungen.

Aufgabe der vorliegenden Erfindung ist es, eine Vorrichtung zum Kühlen einer Folie bei der Folienherstellung derart weiterzubilden, dass zum Einen auf einfache Weise Folien mit einem möglichst geringen Foliendickenunterschied hergestellt werden und zum Anderen die Funktionalität und die Effizienz der dafür notwendigen Stellanordnung noch weiter verbessert und optimiert wird.

Die oben genannte Aufgabe wird durch sämtliche Merkmale des Patentanspruches 1 gelöst. In den abhängigen Ansprüchen sind vorteilhafte Weiterbildungen ausgeführt.

Erfindungsgemäß ist vorgesehen, dass die Stellanordnung ein Hebelsystem umfasst, das ein bewegbares Stellglied und ein bewegbares Ventilelement aufweist, wobei das Stellglied derart auf das Ventilelement wirkt, dass eine Stellwirkung des Ventilelementes verstärkt ist. Eine Besonderheit der vorliegenden Erfindung ist, dass das zu verstellende Ventilelement über das Stellglied effektiver in die jeweilige Position gebracht werden kann. Zudem sorgt das Stellglied dafür, dass eine hohe Stellwirkung des den Volumenstrom des Kühlgases regulierenden Ventilelementes erzielt wird, in dem das Stellglied an einer definierten Stelle am Ventilelement angreift. Eine geringe Auslenkung des Stellgliedes hat erfindungsgemäß zur Folge, dass das Ventilelement einen größeren Stellweg bzw. eine größere Positionsveränderung erfährt, wodurch sich die erhöhte Stellwirkung realisieren lässt.

Erfindungsgemäß umfasst die Erfindung, dass das Ventilelement der Strömung des Kühlgases zugewandt ist und das Stellglied der Strömung des Kühlgases abgewandt ist. Das Ventilelement bestimmt erfindungsgemäß den Querschnitt des Kanals, durch den das Kühlgas in Richtung Austrittsöffnung strömen kann.

Über die Stellanordnung kann der Volumenstrom des Kühlgases und die Temperatur des Kühlgases gleichzeitig eingestellt werden, um eine Profildickenoptimierung der Folie realisieren zu können. Um die Dicke der Folie, insbesondere eines Folienschlauches regeln zu können, wird eine extrudierte Kunststoffschmelze, die z. B. aus einem Blaskopf einer Folienextrusionsanlage entweicht, unterschiedlich über die erfindungsgemäße Vorrichtung erwärmt und/oder gekühlt, wodurch das Dickenprofil der Folie einstellbar ist bzw. beeinflussbar ist. Hierbei wird die Wirkung ausgenutzt, dass bei der Bildung der Folie aus der Folienextrusionsanlage die wärmeren Bereich stärker und die kühleren Bereiche weniger stark ausgereckt werden. Das bedeutet, dass ein höher temperiertes Kühlgas ein dünneres Ausziehen der Folie bewirkt. Parallel umfasst die Erfindung den technischen Vorteil, dass neben der Einstellung der Temperatur des Kühlgases gleichzeitig der Volumenstrom des Kühlgases intelligent variiert werden kann, und zwar in Abhängigkeit von der Temperatur des Kühlgases. Das bedeutet, dass bei einem geringeren Volumenstrom des Kühlgases die Folie noch weiter ausgezogen bzw. verdünnt wird, wodurch eine Stellwirkung beider Parameter, d. h. Kühlgasvolumenstrom und Kühlgastemperatur um ein Vielfaches erhöht werden kann. Folglich ist die erfindungsgemäße Stellanordnung in der Lage, das Dickenprofil der Folie in kürzester Zeit einzustellen.

Ebenfalls ist es denkbar, dass die erfindungsgemäße Stellanordnung dafür sorgt, dass der Kühlgasvolumenstrom in Abhängigkeit von der Kühlgastemperatur oder umgekehrt gesteuert und/oder geregelt wird, dass bedeutet, dass bei einer Änderung der Temperatur des Kühlgases gleichzeitig und parallel der Volumenstrom des Kühlgases veränderbar ist. Um eine Verdünnung der Folie an einer definierten Stelle zu erzielen, kann beispielsweise die erfindungsgemäße Vorrichtung derart funktionieren, dass neben einer Erhöhung der Kühlgastemperatur gleichzeitig der Volumenstrom des Kühlgases bezogen auf den jeweiligen Abschnitt der Folie verringert wird.

Vorteilhafterweise ist vorgesehen, dass das Ventilelement den Querschnitt des Kanals bestimmt. Hierbei steht das Stellglied in Wirkverbindung zum Ventilelement, wobei über eine Auslenkung des Stellgliedes das Ventilelement entsprechend seine Position ändert, wodurch wirkungsvoll der Volumenstrom des Kühlgases einstellbar ist.

Ferner umfasst die Erfindung eine Stellanordnung mit zumindest einem Heizelement, wodurch die Temperatur des Kühlgases einstellbar ist. Der Volumenstrom des Kühlgases sowie die Temperatur des Kühlgases können hiermit gleichzeitig gesteuert und/oder geregelt werden. Die Stellanordnung sorgt somit dafür, dass der Kühlgasvolumenstrom sowie die Kühlgastemperatur gleichzeitig nach definierten Vorgaben eingestellt werden. Das durch das Gehäuse sowie durch den Kanal strömende Kühlgas wird über das Heizelement entsprechend temperiert. Zusätzlich lässt sich über das Hebelsystem der Volumenstrom des Kühlgases entsprechend einstellen, sodass ein gezielter Volumenstrom mit einer definierten Temperatur das Gehäuse verlässt und auf einen definierten Bereich der Folie trifft, um die Dicke der Folie entsprechend einzustellen.

Vorteilhafterweise kann die Stellanordnung einen Antrieb aufweisen, der in Wirkverbindung zum Stellglied steht. Hierbei kann der Antrieb ein elektrischer Antrieb oder ein pneumatischer Antrieb oder ein hydraulischer Antrieb sein. Erfindungsgemäß ist das Heizelement der Antrieb für das Stellglied und/oder das Ventilelement.

In einer weiteren die Erfindung verbessernden Maßnahme kann über eine Veränderung der Position des Stellgliedes die Position des Ventilelementes veränderbar sein. Hierbei kann es von Vorteil sein, dass das Ventilelement innerhalb des Gehäuses schwenkbar um eine Achse gelagert ist. Vorteilhafterweise ist die Achse der Eintrittsöffnung zugewandt.

Erfindungsgemäß ist das Stellglied und/oder das Ventilelement ein Bimetallelement. Vorteilhafterweise ist das Stellglied ein verbiegbares Bimetallelement, durch das mit Änderung der Temperatur des Kühlgases zusätzlich der Volumenstrom des Kühlgases durch eine Verringerung oder eine Vergrößerung des Querschnittes des Kanals, durch den der Kühlgasvolumenstrom leitbar ist, veränderbar ist. Das Bimetallelement kann hierbei mit dem Heizelement derart gekoppelt sein, dass über die Änderung der Kühlgastemperatur der um das Bimetallelement (Stellglied) strömende Kühlgasvolumenstrom gleichzeitig dafür sorgt, dass das Stellglied sich entsprechend verbiegt und/oder einstellt, wodurch gleichzeitig das Ventilelement in seiner Position verändert wird. Hierdurch lässt sich der Volumenstrom des Kühlgases innerhalb des Kanals variieren.

Zudem ist es denkbar, dass der Querschnitt der Auslassöffnung durch eine Positionsänderung des Ventilelementes veränderbar ist, insbesondere in einer Nulllage des Ventilelementes die Auslassöffnung geöffnet ist und in einer möglichen Betriebslage des Ventilelementes der Querschnitt der Auslassöffnung bis zu 60% - 85% der Nulllage reduzierbar ist. Hierbei lässt sich über eine geringe Positionsänderung des Stellgliedes eine große Positionsänderung des Ventilelementes erreichen, wodurch unterschiedliche Betriebslagen des Ventilelementes realisierbar sind.

In der Erfindung ist mit umfasst, dass das Hebelsystem zumindest eine Hebeleinheit aufweist, die eine Vielzahl an beweglichen Ventilelementen aufweist, die über einen Steg miteinander verbunden sind, wobei insbesondere der Steg und die Ventilelemente ein monolithisches Bauteil bilden. Die Ventilelemente sind jeweils in einem Kanal beweglich angeordnet, wobei das Gehäuse die einzelnen Kanäle mit dem Hebelsystem sowie der zumindest einen Hebeleinheit umfasst. Vorteilhafterweise kann die Anzahl der Stellglieder geringer sein als die Anzahl der Ventilelemente. Hierbei kann es ausreichen, dass ein oder eine geringe Anzahl an Stellgliedern an einem Ventilelement jeweils angreift. Über eine Bewegung des Stellgliedes erfolgt eine Auslenkung des mit dem jeweiligen Stellglied in Wirkverbindung stehenden Ventilelementes. Da sämtliche Ventilelemente über den gemeinsamen Steg verbunden sind, erfolgt gleichzeitig eine Mitbewegung der restlichen Ventilelemente in den jeweiligen Kanälen. Es können mehrere Hebelelemente innerhalb des Gehäuses der erfindungsgemäßen Vorrichtung vorgesehen sein.

In einer möglichen Ausführungsform der Erfindung kann das monolithische Bauteil, das sich aus dem Steg sowie den damit verbundenen Ventilelementen zusammensetzt, ein metallisches Stanzteil sein. Hierbei kann das monolithische Bauteil eine kammartige Geometrie aufweisen.

Zudem ist es denkbar, dass die Stellanordnung innerhalb des Gehäuses zumindest einen Grundkörper aufweist, der mit einer Vielzahl an Kanälen für das Kühlgas ausgebildet ist, wobei in jedem Kanal ein Ventilelement angeordnet ist. Hierbei kann die Erfindung mit umfassen, dass der Grundkörper einen Boden aufweist, der das Heizelement aufnimmt und/oder auf dem das Ventilelement und/oder das Stellglied und/oder die Hebeleinheit aufliegt.

In einer weiteren die Erfindung verbessernden Maßnahme kann das Gehäuse ringartig ausgebildet sein, in dem eine Vielzahl an Stellgliedern und Ventilelementen angeordnet sind, wobei die Strömungsrichtung des Kühlgases radial zum ringartigen Gehäuse verläuft oder dass das Gehäuse stabförmig ausgebildet ist, in dem eine Vielzahl an Stellgliedern und Ventilelementen angeordnet sind, die nebeneinander angeordnet sind. Die Anzahl der Ventilelemente kann größer sein als die Anzahl der Stellglieder.

Die Stellwirkung der Stellanordnung kann dadurch verstärkt werden, dass das Ventilelement ein freies Ende aufweist, das der Austrittsöffnung zugewandt ist und das Stellglied ein freies Ende aufweist, dass der Eintrittsöffnung zugewandt ist, wobei insbesondere der Abstand zwischen dem freien Ende des Stellgliedes und der Achse des Ventilelementes geringer ist als der Abstand zwischen dem freien Ende des Ventilelementes und dem freien Ende des Stellgliedes. Somit kann es ausreichen, dass über eine geringe Verstellung oder Positionsänderung des freien Endes des Stellgliedes, welches direkt auf das Ventilelement wirkt, eine große Positionsänderung des freien Endes des Ventilelementes bewirkt wird, wodurch eine große Veränderung des Querschnittes des Kanals erzielbar ist, durch den das Kühlgas strömt und an einer definierten Stelle auf die Folie trifft.

In einer möglichen Ausgestaltung der Erfindung weist die Stellanordnung eine Vielzahl an Heizelementen auf, wobei jedes Heizelement einem Kanal zugeordnet ist. Das Heizelement kann beispielsweise als Heizpatrone ausgebildet sein. Über das Hebelsystem mit der erhöhten Stellwirkung hat sich gezeigt, dass weniger Heizenergie für das Heizelement bzw. für die Heizelemente notwendig ist, um die gleiche Stellwirkung zu erzielen.

Weitere Vorteile, Merkmale und Einzelheiten ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Schnittansicht auf eine erfindungsgemäße Vorrichtung zum Kühlen einer Folie mit einer Stellanordnung, die ein Hebelsystem umfasst,
- Fig. 2: eine mögliche Draufsicht eines Ausführungsbeispieles auf eine Stellanordnung, die gemäß Figur 1 einsetzbar ist,

- Fig.3: eine weitere Darstellung eines Ausführungsbeispieles einer möglichen Stellanordnung und
- Fig. 4: eine schematische Draufsicht auf eine Hebeleinheit, die in der Stellanordnung angeordnet ist.

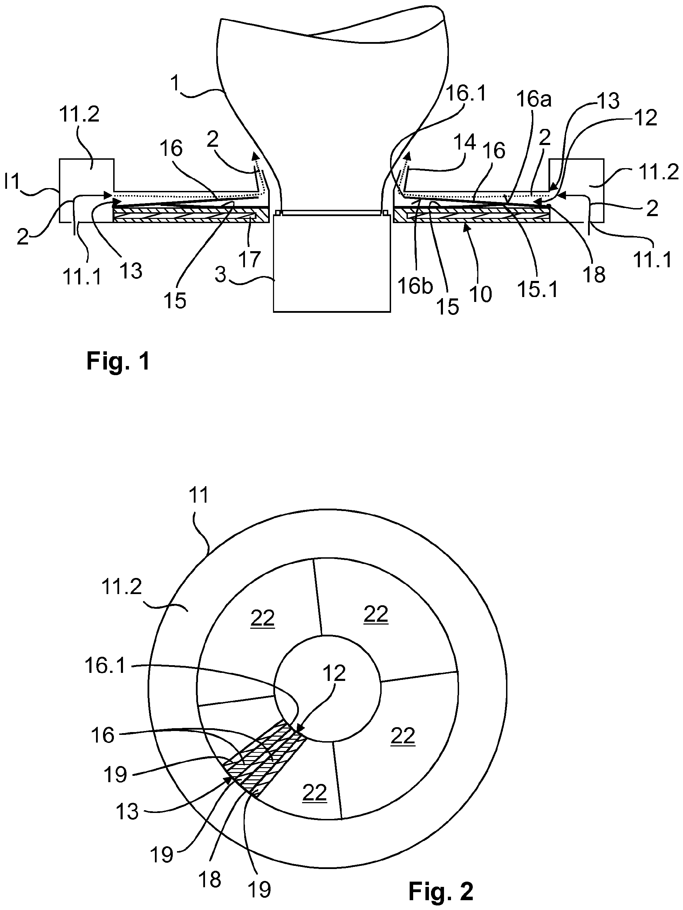

In Figur 1 ist rein schematisch eine Vorrichtung zum Kühlen einer Folie 1 dargestellt, die in einer nicht explizit dargestellten Folienextrusionsanlage erzeugbar ist. Im vorliegenden Ausführungsbeispiel handelt es sich um eine Blasfolienextrusionsanlage, die über einen Blaskopf 3 einen Austritt der Folie 1 bewirkt. Die gezeigten Ausführungsbeispiele lassen sich ebenfalls auf diverse Extrusionsanlagen, insbesondere auf eine Flachfolienextrusionsanlage beziehen, die ebenfalls mit einem Blaskopf arbeitet, aus dem Folie austritt.

Beabstandet zum Blaskopf 3 ist ein Gehäuse 11 der erfindungsgemäßen Kühlvorrichtung vorgesehen, um die aus dem Blaskopf 3 austretende Folie 1 zu kühlen. Die Kühlvorrichtung entspricht im Wesentlichen der beschriebenen Kühleinheit aus der PCT/EP2011/072648.

Hierbei wird die Folie 1 durch ein Kühlgas 2 an definierten Stellen gekühlt, wobei eine Stellanordnung 10 dafür sorgt, wie hoch der Volumenstrom des Kühlgases 2 ist, der auf die Folie 1 trifft, und wie hoch die Temperatur dieses Kühlgases 1 ist. Innerhalb des Gehäuses 11 sind eine Vielzahl an Kanälen 12 vorgesehen, wobei jeder Kanal eine Eintrittsöffnung 13 und eine Austrittsöffnung 14 für das Kühlgas 2 aufweist. Die Stellanordnung 10 weist ein Hebelsystem auf, wobei das Hebelsystem in jedem Kanal 12 mit einem bewegbaren Ventilelement 16 ausgeführt ist. Am Ventilelement 16 gemäß Figur 1 wirkt ein bewegbares Stellglied 15. In Figur 1 ist die Nulllage des Stellgliedes 15 nicht gezeigt. In der Nulllage liegt das Stellglied 15 in der waagerechten Position, wobei das Ventilelement 16 unmittelbar auf dem Stellglied 15 liegt. Das Stellglied 15 ist unmittelbar in Kontakt mit dem Ventilelement 16. Erfolgt über einen Antrieb eine Bewegung des Stellgliedes 15 aus der Nulllage in die gezeigte Betriebslage, verschwenkt sich das Ventilelement 16 um seine Achse 18, wodurch der Querschnitt des Kanals 12 verändert wird und somit der Volumenstrom des Kühlgases 2 beeinflusst wird.

Im vorliegenden Ausführungsbeispiel ist das Stellglied 15 ein Bimetallelement. Zudem weist die Stellanordnung 10 ein Heizelement 17 auf, welches über eine definierte Einbringung einer Temperatur das Stellglied 15 aus seiner Nulllage in eine Betriebslage bringen kann. Das Heizelement 17 wirkt als Antrieb zur Bewegung des Stellgliedes 15, um das Ventilelement 16 in die gewünschte Position zu verschwenken. Alternativ ist es denkbar, dass der Antrieb für das Stellglied 15 durch einen elektrischen Antrieb oder durch einen pneumatischen Antrieb oder durch einen hydraulischen Antrieb verwirklicht wird.

Das Heizelement 17 hat zudem die Funktion die Temperatur des Kühlgases 2, das durch das Gehäuse 11 strömt, zu beeinflussen bzw. zu variieren.

Wie Figur 1 verdeutlicht weist das Ventilelement 16 ein freies Ende 16.1 auf, das der Austrittsöffnung 14 zugewandt ist. Das Stellglied 15 hingegen weist ein freies Ende 15.1 auf, das der Eintrittsöffnung 13 zugewandt ist. Da das freie Ende 15.1 des Stellgliedes 15 relativ mittig am Ventilelement 16 angreift, kann eine gute und wirkungsvolle Stellwirkung des Ventilelementes 16 erzielt werden. Je weiter das freie Ende 15.1 zur Achse 18 hin an der Unterseite 16b des Ventilelementes 16 angreift, um so höher kann eine Stellwirkung des Ventilelementes 16 erzielt werden.

Die Oberseite 16a des Ventilelementes 16 ist der Strömung des Kühlgases 2 zugewandt. An der Unterseite 16b des Ventilelementes 16 wirkt hingegen das Stellglied 15 mit seinem freien Ende 15.1. Somit befindet sich das Stellglied 15 abgewandt zur Strömung des Kühlgases 2.

Damit das Kühlgas 2 in das Gehäuse 11 einströmen kann, weist das Gehäuse 11 eine Einlassöffnung 11.1 auf. Das Kühlgas 2 gelangt über einen Vorratsraum 11.2 in den Kanal 12, wobei gleichzeitig je nach Anforderungen bzgl. der Dicke der Folie 1 die Stellanordnung 10 den Volumenstrom des Kühlgases 2 und die Temperatur des Kühlgases 2 variieren kann. Dieses erfolgt durch eine entsprechende Positionsveränderung des Ventilelementes 16 und einer entsprechenden Wärmeeinbringung durch das Heizelement 17 in das Kühlgas 2.

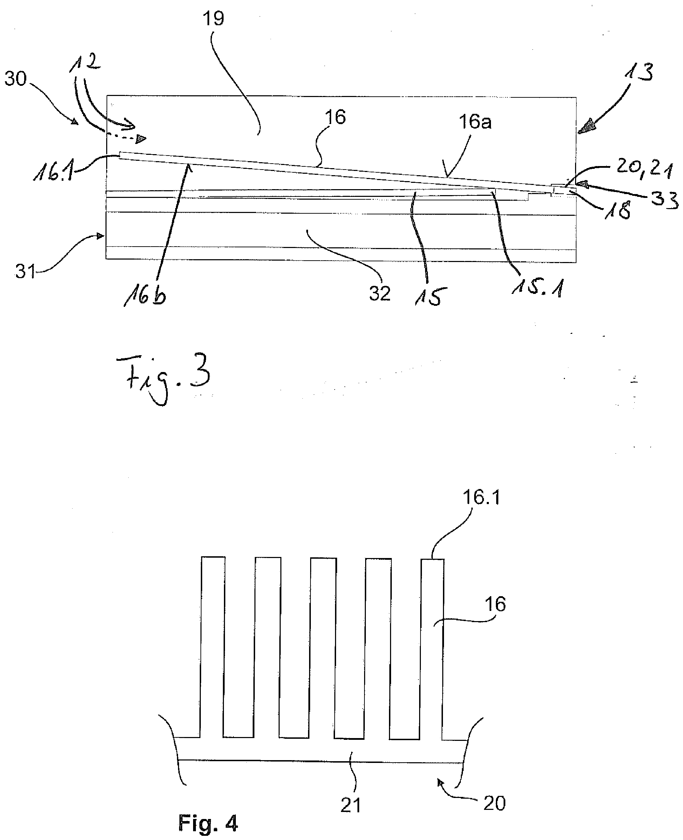

In Figur 2 ist schematisch eine Draufsicht auf die erfindungsgemäße Kühlvorrichtung mit der Stellanordnung 10 dargestellt. Es wird deutlich, dass die Stellanordnung eine Vielzahl an Ventilelementen 16 aufweist sowie mehrere Stellglieder vorgesehen sind, um die Ventilelemente 16 entsprechend in eine Betriebslage zu bewegen. Das gezeigte Hebelsystem der Stellanordnung 10 weist mehrere Hebeleinheiten 20 auf, die aus einer Vielzahl an beweglichen Ventilelementen 16 ausgeführt sind. Gemäß Figur 3 wird darauf ebenfalls Bezug genommen. Die Ventilelemente 16 sind über einen Steg 21 miteinander verbunden, der in Figur 3 und Figur 4 dargestellt ist. Der Steg 21 und die Ventilelemente 16 jeder Hebeleinheit 20 bilden ein monolithisches Bauteil. Beispielsweise ist es denkbar, dass dieses monolithische Bauteil ein metallisches Stanzteil, insbesondere ein Blechteil ist. Das monolithische Bauteil ist gemäß Figur 2 bis Figur 4 kammartig ausgebildet. Um jede Hebeleinheit 20 entsprechend zu bewegen, wirkt ein Stellglied 15 lediglich auf ein Ventilelement 16. Wenn nun das Stellglied 15 sich verschwenkt, erfolgt gleichzeitig eine Bewegung des am Stellglied 15 in Kontakt stehenden Ventilelementes 16, der um die Achse 18 sich verschwenkt. Gleichzeitig verschwenken sich die mit dem gemeinsamen Steg 21 verbundenen Ventilelemente 16 mit, wodurch jedes Ventilelement 16 innerhalb seines Kanals seine jeweilige Betriebslage erreicht. Hierdurch lassen sich Querschnittsveränderungen in jedem Kanal 12 erzielen. Eine mögliche Hebeleinheit 20 ist zudem in Figur 4 gezeigt.

Zudem zeigen Figur 2 und Figur 3, dass die Stellanordnung 10 einen Grundkörper 30 mit einem Boden 31 aufweist. Der Grundkörper 30 bildet eine Vielzahl an Kanälen 12, in denen die Ventilelemente 16 beweglich angeordnet sind. Die Hebeleinheit 20 ist in einer Aufnahme 33 des Grundkörpers 30 eingesetzt, wobei der Steg 21 zuverlässig in der besagten Aufnahme 33 gehalten ist. Zusätzlich ist sichergestellt, dass die Hebeleinheit 20 um die Achse 18 verschwenkt werden kann. Zudem weist der Boden 31 eine Aufnahme 32 auf, in der das Heizelement 17 einbringbar ist. Jeder Kanal 12 ist durch Kanalwandungen 19 begrenzt.

In Figur 2 können eine Vielzahl an Grundkörpern 30 angeordnet werden, die in dem Gehäuse 11 einsetzbar sind. Das Gehäuse kann aus mehreren Sektoren 22 sich zusammenziehen, in die jeweils ein oder mehrere Grundkörper 30 einsetzbar sind. Exemplarisch ist jedoch nur ein Teilbereich eines Sektors 22 gezeigt, in dem ein Grundkörper 30 mit der Stellanordnung 10 positioniert ist. Die eigentliche Ausführung sieht vor, dass das Gehäuse 11 vollständig durch eine oder mehrere Stellanordnungen 10, insbesondere Ventilelementen 16, Stellgliedern 15 etc. ausgefüllt ist. Gemäß Figur 2 ist das Gehäuse 11 ringartig ausgebildet, indem eine Vielzahl an Stellgliedern 15 und Ventilelementen 16 positioniert sind, wobei die Strömungsrichtung des Kühlgases 2 radial zum ringartigen Gehäuse 11 verläuft. Selbstverständlich ist es in einer alternativen, nicht explizit dargestellten Ausführungsform denkbar, dass das Gehäuse 11 stabförmig ausgebildet ist, in dem eine Vielzahl an Stellgliedern 15 und Ventilelementen 16 angeordnet sind, die nebeneinander angeordnet sind. Hierzu wird auf die PCT/EP2011/072648 Bezug genommen, die in Figur 7 eine derartige, linienförmige Anordnung der Ventilelemente aufweist. In beiden Fällen ist der Einsatz von Grundkörpern 30 gemäß Figur 3 denkbar.

### Bezugszeichenliste

- 1: Folie
- 2: Kühlgas
- 3: Blaskopf
- 10: Stellanordnung
- 11: Gehäuse
- 11.1: Einlassöffnung
- 11.2: Vorratsraum
- 12: Kanal
- 13: Eintrittsöffnung
- 14: Austrittsöffnung
- 15: Stellglied
- 15.1: freies Ende
- 16: Ventilelement
- 16a: Oberseite
- 16b: Unterseite
- 16.1: freies Ende
- 17: Heizelement
- 18: Achse
- 19: Kanalwandung
- 20: Hebeleinheit
- 21: Steg
- 22: Sektor
- 30: Grundkörper
- 31: Boden
- 32: Aufnahme für 17
- 33: Aufnahme für 20

## Patentansprüche

1. Vorrichtung zum Kühlen einer Folie (1), die insbesondere in einer Folienextrusionsanlage erzeugbar ist, mit
einem Gehäuse (11), das zumindest einen Kanal (12), zumindest eine Eintrittsöffnung (13) und zumindest eine Austrittsöffnung (14) aufweist, durch die ein Kühlgas (2) strömbar ist,
einer Stellanordnung (10), mit der der durch die Austrittsöffnung (14) ausströmbare Volumenstrom des Kühlgases (2) und die Temperatur des durch die Austrittsöffnung (14) auströmbaren Kühlgases (2) einstellbar ist,
**dadurch gekennzeichnet,**
**dass** die Stellanordnung (10) ein Hebelsystem umfasst, das ein bewegbares Stellglied (15) und ein bewegbares Ventilelement (16) aufweist, wobei das Stellglied (15) derart auf das Ventilelement (16) wirkt, dass eine Stellwirkung des Ventilelementes (16) verstärkt ist,
**dass** die Stellanordnung (10) zumindest ein Heizelement (17) aufweist, wodurch die Temperatur des Kühlgases (2) einstellbar ist, wobei das Heizelement (17) der Antrieb für das Stellglied und/oder das Ventilelement (16) ist, wobei das Stellglied (15) und/oder das Ventilelement (16) ein Bimetallelement ist/sind.

2. Vorrichtung nach Anspruch 1,
**dadurch gekennzeichnet,**
**dass** das Ventilelement (16) der Strömung des Kühlgases (2) zugewandt ist und das Stellglied (15) der Strömung des Kühlgases (2) abgewandt ist.

3. Vorrichtung nach Anspruch 1 oder 2,
**dadurch gekennzeichnet,**
**dass** das Stellglied (15) in Wirkverbindung zum Ventilelement (16) steht.

4. Vorrichtung nach einem der vorhergehenden Ansprüche,
**dadurch gekennzeichnet,**
**dass** das Ventilelement (16) den Querschnitt des Kanals (12) bestimmt.

5. Vorrichtung nach einem der vorhergehenden Ansprüche,
**dadurch gekennzeichnet,**
**dass** die Stellanordnung (10) einen Antrieb aufweist, der in Wirkverbindung zum Stellglied (15) steht.

6. Vorrichtung nach einem der vorhergehenden Ansprüche,
**dadurch gekennzeichnet,**
**dass** über eine Veränderung der Position des Stellgliedes (15) die Position des Ventilelementes (16) veränderbar ist.

7. Vorrichtung nach einem der vorhergehenden Ansprüche,
**dadurch gekennzeichnet,**
**dass** das Ventilelement (16) innerhalb des Gehäuses (11) schwenkbar um eine Achse (18) gelagert ist, insbesondere dass die Achse (18) der Eintrittsöffnung (13) zugewandt ist.

8. Vorrichtung nach einem der vorhergehenden Ansprüche,
**dadurch gekennzeichnet,**
**dass** das Stellglied (15) das Ventilelement (16) an seiner der Strömung des Kühlgases (2) abgewandten Seite (16b) kontaktiert.

9. Vorrichtung nach einem der vorhergehenden Ansprüche,
**dadurch gekennzeichnet,**
**dass** der Querschnitt der Austrittsöffnung (14) durch eine Positionsänderung des Ventilelementes (16) veränderbar ist, insbesondere in einer Nulllage des Ventilelementes (16) die Austrittsöffnung (14) geöffnet ist und in einer möglichen Betriebslage des Ventilelementes (16) der Querschnitt der Austrittsöffnung (14) bis zu 60% - 85% der Nulllage reduzierbar ist.

10. Vorrichtung nach einem der vorhergehenden Ansprüche,
**dadurch gekennzeichnet,**
**dass** das Hebelsystem zumindest eine Hebeleinheit (20) aufweist, die eine Vielzahl an beweglichen Ventilelementen (16) aufweist, die über einen Steg (21) miteinander verbunden sind, wobei insbesondere der Steg (21) und die Ventilelemente (16) ein monolithisches Bauteil bilden.

11. Vorrichtung nach 10,
**dadurch gekennzeichnet,**
**dass** das monolithische Bauteil ein metallisches Stanzteil ist.

12. Vorrichtung nach einem der vorhergehenden Ansprüche,
**dadurch gekennzeichnet,**
**dass** die Stellanordnung (10) innerhalb des Gehäuses (11) zumindest einen Grundkörper (30) aufweist, der mit einer Vielzahl an Kanälen (12) für das Kühlgas (2) ausgebildet ist, wobei in jedem Kanal (12) ein Ventilelement (16) angeordnet ist, insbesondere dass der Grundkörper (30) einen Boden (31) aufweist, der das Heizelement (17) aufnimmt und/oder auf dem das Ventilelement (16) und/oder das Stellglied (15) und/oder die Hebeleinheit (20) aufliegt.

13. Vorrichtung nach einem der vorhergehenden Ansprüche,
**dadurch gekennzeichnet,**
**dass** das Gehäuse (11) ringartig ausgebildet ist, in dem eine Vielzahl an Stellgliedern (15) und Ventilelementen (16) angeordnet sind, wobei die Strömungsrichtung des Kühlgases (2) radial zum ringartigen Gehäuse (11) verläuft,
oder
**dass** das Gehäuse (11) stabförmig ausgebildet ist, in dem eine Vielzahl an Stellgliedern (15) und Ventilelementen (16) angeordnet sind, die nebeneinander angeordnet sind.

14. Vorrichtung nach einem der vorhergehenden Ansprüche,
**dadurch gekennzeichnet,**
**dass** die Stellanordnung (10) den Volumenstrom des Kühlgases (2) in Abhängigkeit von der Temperatur des Kühlgases (2) oder umgekehrt gleichzeitig steuert und/oder regelt.

15. Vorrichtung nach einem der vorhergehenden Ansprüche,
**dadurch gekennzeichnet,**
**dass** das Ventilelement (16) ein freies Ende (16.1) aufweist, das der Austrittsöffnung (14) zugewandt ist und das Stellglied (15) ein freies Ende (15.1) aufweist, das der Eintrittsöffnung (13) zugewandt ist, wobei insbesondere der Abstand zwischen dem freien Ende (15.1) des Stellgliedes (15) und der Achse (18) des Ventilelementes (16) geringer ist als der Abstand zwischen dem freien Ende (16.1) des Ventilelementes (16) und dem freien Ende (15.1) des Stellgliedes (15).

## Claims

1. Apparatus for cooling a film (1), which may be produced in particular in a film extrusion plant, with
- a housing (11) comprising at least one channel (12), at least one inlet opening (13) and at least one outlet opening (14) through which a cooling gas (2) may flow,
- an actuating arrangement (10), by means of which the volumetric flow of the cooling gas (2) which may flow out through the outlet opening (14), and the temperature of the cooling gas (2) which may flow out through the outlet opening (14), may be adjusted,
**characterized in that**
the actuating arrangement (10) comprises a lever system which has a movable actuator (15) and a movable valve element (16), wherein the actuator (15) acts on the valve element (16) in such a way as to amplify the actuating action of the valve element (16)
the actuating arrangement (10) has at least one heating element (17), wherein the temperature of the cooling gas (2) is adjustable, and wherein the heating element (17) is the drive for the actuator and/or the valve element (16), wherein the actuator (15) and/or the valve element (16) are/is (a) bimetallic element(s).

2. Apparatus according to claim 1,
**characterized in that**
the valve element (16) faces the flow of the cooling gas (2) while the actuator (15) faces away from the flow of the cooling gas (2).

3. Apparatus according to claim 1 or 2,
**characterized in that**
the actuator (15) is in operative connection with the valve element (16).

4. Device according to one of the preceding claims,
**characterized in that**
the valve element (16) determines the cross-section of the channel (12).

5. Device according to one of the preceding claims,
**characterized in that**
the actuating arrangement (10) has a drive which is in operative connection with the actuator (15).

6. Device according to one of the preceding claims,
**characterized in that**
the position of the valve element (16) may be changed by changing the position of the actuator (15).

7. Device according to one of the preceding claims,
**characterized in that**
the valve element (16) is mounted to pivot about an axis (18) within the housing (11), in particular wherein the axis (18) faces the inlet opening (13).

8. Device according to one of the preceding claims,
**characterized in that**
the actuator (15) contacts the valve element (16) on its side (16b) facing away from the flow of the cooling gas (2).

9. Device according to one of the preceding claims,
**characterized in that**
that the cross-section of the outlet opening (14) may be changed by a change in position of the valve element (16), in particular to a zero position of the valve element (16) wherein the outlet opening (14) is open, and to a possible operating position of the valve element (16) wherein the cross-section of the outlet opening (14) may be reduced up to 60% - 85% of the zero position.

10. Device according to one of the preceding claims,
**characterized in that**
the lever system has at least one lever unit (20) which has a plurality of movable valve elements (16) which are connected to one another via a web (21), wherein, in particular, the web (21) and the valve elements (16) form a monolithic component.

11. Device according to 10,
**characterized in that**
the monolithic component is a metallic stamped part.

12. Device according to one of the preceding claims,
**characterized in that**
the actuating arrangement (10) has at least one main body (30) within the housing (11), which is formed by a plurality of channels (12) for the cooling gas (2), wherein a valve element is arranged (16) in each channel (12), and wherein, in particular, the base body (30) comprises a bottom (31) which receives the heating element (17) and/or upon which the valve element (16) and/or the actuator (15) and/or the lever unit (20) rest(s).

13. Device according to one of the preceding claims,
**characterized in that**
the housing (11) is of an annular design, in which a plurality of actuators (15) and valve elements (16) are arranged, wherein the flow direction of the cooling gas (2) extends radially to the annular housing (11), or wherein the housing (11) is rod-shaped, in which a plurality of actuators (15) and valve elements (16) are arranged next to one another.

14. Device according to one of the preceding claims,
**characterized in that**
the actuating arrangement (10) simultaneously controls and/or regulates the volume flow of the cooling gas (2) as a function of the temperature of the cooling gas (2) or vice versa.

15. Device according to one of the preceding claims,
**characterized in that**
the valve element (16) has a free end (16.1) which faces the outlet opening (14) while the actuator (15) has a free end (15.1) which faces the inlet opening (13), wherein, in particular, the distance between the free end (15.1) of the actuator (15) and the axis (18) of the valve element (16) is less than the distance between the free end (16.1) of the valve element (16) and the free end (15.1) of the actuator (15).

## Revendications

1. Equipement pour refroidir une feuille (1), qui en particulier peut être produite dans une installation d'extrusion de feuilles, comprenant
une enveloppe (11), qui présente au moins un conduit (12), au moins un orifice d'entrée (13) et au moins un orifice de sortie (14), par lesquels peut passer un gaz de refroidissement (2),
un agencement de réglage (10), à l'aide duquel il est possible d'ajuster le débit volumique du gaz de refroidissement (2) sortant par l'orifice de sortie (14) et la température du gaz de refroidissement (2) sortant par l'orifice de sortie (14),
**caractérisé en ce que**
l'agencement de réglage (10) comprend un système de levier, qui présente un actionneur mobile (15) et un élément de vanne mobile (16), l'actionneur (15) agissant sur l'élément de vanne (16) de façon à renforcer un effet de réglage de l'élément de vanne (16),
**en ce que** l'agencement de réglage (10) présente au moins un élément chauffant (17), ce grâce à quoi il est possible d'ajuster la température du gaz de refroidissement (2), l'élément chauffant (17) étant le mécanisme commandant l'actionneur et/ou l'élément de vanne (16), l'actionneur (15) et/ou l'élément de vanne (16) étant des éléments bimétalliques.

2. Equipement selon la revendication 1,
**caractérisé en ce que**
l'élément de vanne (16) est dirigé vers l'écoulement du gaz de refroidissement (2), et l'actionneur (15) est opposé à l'écoulement du gaz de refroidissement (2).

3. Equipement selon la revendication 1 ou 2,
**caractérisé en ce que**
l'actionneur (15) est en liaison active avec l'élément de vanne (16).

4. Equipement selon l'une des revendications précédentes,
**caractérisé en ce que**
l'élément de vanne (16) définit la section transversale du conduit (12).

5. Equipement selon l'une des revendications précédentes,
**caractérisé en ce que**
l'agencement de réglage (10) présente un mécanisme de commande qui est en liaison active avec l'actionneur (15).

6. Equipement selon l'une des revendications précédentes,
**caractérisé en ce que**
la position de l'élément de vanne (16) peut être modifiée par une modification de la position de l'actionneur (15).

7. Equipement selon l'une des revendications précédentes,
**caractérisé en ce que**
l'élément de vanne (16) est logé à l'intérieur de l'enveloppe (11) de façon à pouvoir pivoter autour d'un axe (18), en particulier **en ce que** l'axe (18) est dirigé vers l'orifice d'entrée (13).

8. Equipement selon l'une des revendications précédentes,
**caractérisé en ce que**
l'actionneur (15) est en contact avec l'élément de vanne (16) sur son côté (16b) opposé à l'écoulement du gaz de refroidissement (2).

9. Equipement selon l'une des revendications précédentes,
**caractérisé en ce que**
la section transversale de l'orifice de sortie (14) peut être modifiée par une modification de la position de l'élément de vanne (16), en particulier l'orifice de sortie (14) est ouvert dans la position zéro de l'élément de vanne (16), et, dans une position possible de fonctionnement de l'élément de vanne (16), il est possible de réduire la section transversale de l'orifice de sortie (14) jusqu'à 60 %-85 % de la position zéro.

10. Equipement selon l'une des revendications précédentes,
**caractérisé en ce que**
le système de levier comprend au moins une unité de levier (20), qui présente un grand nombre d'éléments de vanne mobiles (16), qui sont reliés les uns aux autres par une traverse (21), en particulier la traverse (21) et les éléments de vanne (16) formant un composant monolithique.

11. Equipement selon la revendication 10,
**caractérisé en ce que**
le composant monolithique est une pièce métallique fabriquée à la presse.

12. Equipement selon l'une des revendications précédentes,
**caractérisé en ce que**
l'agencement de réglage (10) présente à l'intérieur de l'enveloppe (11) au moins un corps de base (30), qui est configuré avec un grand nombre de conduits (12) pour le gaz de refroidissement (2), un élément de vanne (16) étant disposé dans chaque conduit (12), en particulier **en ce que** le corps de base (30) présente un fond (31), qui reçoit l'élément chauffant (17) et/ou sur lequel s'appuient l'élément de vanne (16) et/ou l'actionneur (15) et/ou l'unité de levier (20).

13. Equipement selon l'une des revendications précédentes,
**caractérisé en ce que**
l'enveloppe (11) a une configuration annulaire, dans laquelle sont disposés un grand nombre d'actionneurs (15) et d'éléments de vanne (16), le sens d'écoulement du gaz de refroidissement (2) étant radial par rapport à l'enveloppe annulaire (11),
ou
**en ce que** l'enveloppe (11) est configurée en forme de barre, dans laquelle sont disposés un grand nombre d'actionneurs (15) et d'éléments de vanne (16), qui sont disposés les uns à côté des autres.

14. Equipement selon l'une des revendications précédentes,
**caractérisé en ce que**
l'agencement de réglage (10) commande et/ou règle simultanément le débit volumique du gaz de refroidissement (2) en fonction de la température du gaz de refroidissement (2), ou inversement.

15. Equipement selon l'une des revendications précédentes,
**caractérisé en ce que**
l'élément de vanne (16) présente une extrémité libre (16.1), qui est dirigée vers l'orifice de sortie (14), et l'actionneur (15) présente une extrémité libre (15.1), qui est dirigée vers l'orifice d'entrée (13), en particulier la distance entre l'extrémité libre (15.1) de l'actionneur (15) et l'axe (18) de l'élément de vanne (16) étant inférieure à la distance entre l'extrémité libre (16.1) de l'élément de vanne (16) et l'extrémité libre (15.1) de l'actionneur (15).
